# FASCICULE DE BREVET EUROPEEN

(11) **EP 2 652 628 B1**
(45) Date de publication et mention de la délivrance du brevet: **07.02.2018**
(21) Numéro de dépôt: 11804523.6
(22) Date de dépôt: 09.12.2011
(51) Int. Cl.: G06F 13/38, G06F 13/40

(54) **DISPOSITIF DE CONNEXION ETHERNET MULTIPLE A UNE UNITE INFORMATIQUE ET ENSEMBLE UNITE INFORMATIQUE ET EQUIPEMENTS RELIES ENSEMBLE**
VORRICHTUNG FÜR MEHRFACH-ETHERNETANSCHLUSS AN EINEN COMPUTER UND MITEINANDER VERBUNDENE COMPUTERANORDNUNG UND GERÄT
DEVICE FOR MULTIPLE ETHERNET CONNECTION TO A COMPUTER UNIT AND COMPUTER UNIT ASSEMBLY AND EQUIPMENT LINKED TOGETHER

(30) Priorité: 17.12.2010 FR 1060693
(43) Date de publication de la demande: 23.10.2013
(73) Titulaire: Safran Electronics & Defense, 92100 Boulogne-Billancourt (FR)
(72) Inventeur: COURTEILLE, Jean-Marie, F-92100 Boulogne-Billancourt (FR); GUILLOT, François, F-92100 Boulogne-Billancourt (FR)
(74) Mandataire: Lavialle, Bruno François Stéphane
(86) Numéro de dépôt international: PCT/EP2011/072380
(87) Numéro de publication internationale: WO 2012/080142

(56) Documents cités:
- JP-A- 7 066 848
- US-A- 5 469 545
- US-A1- 2002 181 486

## Description

La présente invention concerne un dispositif de connexion multiple à une unité informatique. L'invention a également pour objet un ensemble unité informatique et équipements.

Il est connu de relier une unité informatique, telle qu'un ordinateur ou un serveur, à des équipements comme des périphériques, des ordinateurs, des routeurs, ou bien encore d'autres équipements électroniques de réseau.

A cette fin, l'unité informatique et les équipements sont pourvus de ports réseau permettant un échange de données en établissant entre eux une liaison, par exemple de type Ethernet.

Dans les réseaux subissant une contrainte de sécurité forte, il est important que les ports de l'unité informatique soient étanches entre eux, c'est-à-dire qu'aucune donnée ne puisse transiter d'un port à l'autre sans que le processeur de l'unité informatique n'ait commandé un tel transit.

Dans de telles conditions, le processeur doit en outre contrôler la bande passante, la latence, la gigue... pour éviter que des données ne soient inopportunément rejetées ou égarées et pour prévenir également un engorgement de la liaison.

A cette fin, les constructeurs d'unités centrales utilisent des cartes mères présentant plusieurs ports contrôlés par le processeur de l'unité centrale.

Toutefois, il est fréquent que le nombre de ports des unités centrales courantes soit insuffisant.

Il existe des unités centrales équipées d'un microcontrôleur disposant d'un nombre plus important de ports. Ces microcontrôleurs font toutefois l'objet d'une production restreinte rendant ces microcontrôleurs coûteux et les soumettant à une obsolescence relativement rapide. La connaissance du fonctionnement interne du microprocesseur est en outre fermée aux acheteurs de ces microcontrôleurs.

Une autre solution moins coûteuse est de raccorder à l'unité centrale un commutateur Ethernet (ou « switch »). Le renouvellement des gammes des fabricants de commutateurs est cependant relativement rapide, interdisant une continuité de fourniture de ces commutateurs. En outre, la répartition des données entre les ports est réalisée indépendamment du microprocesseur de l'unité centrale.

Encore une autre solution consiste à ajouter à l'unité centrale des interfaces Ethernet pourvues de ports Ethernet. Ceci suppose une importante infrastructure de bus interne. Les bus parallèles utilisés à cette fin sont supplantés par les bus de type PCIexpress plus performants. Ce protocole est toutefois compliqué et nécessite de recourir à une gestion logicielle du bus. La sécurité des transmissions est de plus difficile à assurer.

US2002181486 décrit un réseau de télécommunication et en particulier un système de multiplexage de données de ports multiples.

US5469545 décrit un système de concentrateur de données de réseau vers un ordinateur hôte.

Un but de l'invention est de fournir un moyen permettant d'augmenter le nombre de connexions à une unité centrale en limitant le risque d'une atteinte à la sécurité des transmissions.

A cet effet, on prévoit, selon l'invention, un dispositif de connexion multiple à une unité informatique, le dispositif comportant au moins une liaison principale pourvue d'un connecteur de raccordement à l'unité informatique et reliée par un module d'aiguillage à une pluralité de liaisons secondaires qui sont pourvues d'un connecteur de raccordement externe et qui ont un débit global au plus sensiblement égal à un débit maximal de la liaison principale.

Ainsi, le dispositif a une structure simple permettant de multiples connexions sans changement de protocole de communication. Les liaisons secondaires ne sont pas reliées entre elles mais à la liaison principale via le module d'aiguillage. Le module d'aiguillage ne sert à l'émission que pour orienter les trames émises vers la liaison secondaire correspondante et assure simplement à la réception le transfert des trames des liaisons secondaires à la liaison principale : le module d'aiguillage ne permet pas un raccordement direct des liaisons secondaires entre elles. Enfin, cette simplicité permet le raccordement du dispositif à de nombreux types d'unités informatiques, le dispositif étant gérable sans nécessité de ressources importantes tant matérielles que logicielles. Ce type d'architecture autorise un déterminisme relativement maîtrisé en ce qui concerne la bande passante, la latence, la gigue.

De préférence, chaque liaison secondaire comporte un module de gestion de trames.

Ceci permet un meilleur contrôle des paramètres de la communication, dont la bande passante, et décharge l'unité informatique d'au moins une partie de la gestion des trames.

Avantageusement, le module de gestion présente au moins l'une des caractéristiques suivantes :
- le module de gestion de trames est agencé pour effectuer un ordonnancement des trames et, de préférence, l'ordonnancement est du type premier entré premier sorti,
- le module de gestion de trames est agencé pour rejeter des trames en fonction d'au moins un critère prédéterminé.

De préférence, le module de gestion comporte une entrée de configuration reliée à la liaison principale ou alternativement, le module de gestion de trames comporte une entrée de configuration reliée par une liaison additionnelle à un connecteur de raccordement à l'unité informatique.

Ceci permet à l'unité informatique de piloter directement le module de gestion de trames pour par exemple adapter les paramètres de gestion à une évolution des contraintes s'appliquant sur l'échange des données entre l'unité informatiques et les équipements.

L'invention a également pour objet un ensemble unité informatique et équipements raccordés à l'unité informatique par un dispositif comportant une liaison principale pourvue d'un connecteur de raccordement à l'unité informatique et reliée par un module d'aiguillage à une pluralité de liaisons secondaires pourvues chacune d'un connecteur de raccordement à l'un des équipements, l'unité informatique et les équipements étant programmés chacun pour ne pas émettre sur la liaison secondaire de trames de taille et de nombre supérieurs à des seuils prédéterminés pour que les liaisons secondaires assurent un débit global au plus sensiblement égal à un débit maximal de la liaison principale.

Ainsi, il n'est pas nécessaire de prévoir une limitation physique de débit sur les liaisons secondaires, cette limitation résulte d'une programmation de l'unité informatique et des équipements visant à limiter la taille des trames émises sur les liaisons secondaires.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique d'un ensemble unité informatique / équipements conforme à l'invention,
- la figure 2 est une vue schématique d'un dispositif de multiconnexion conforme à l'invention.

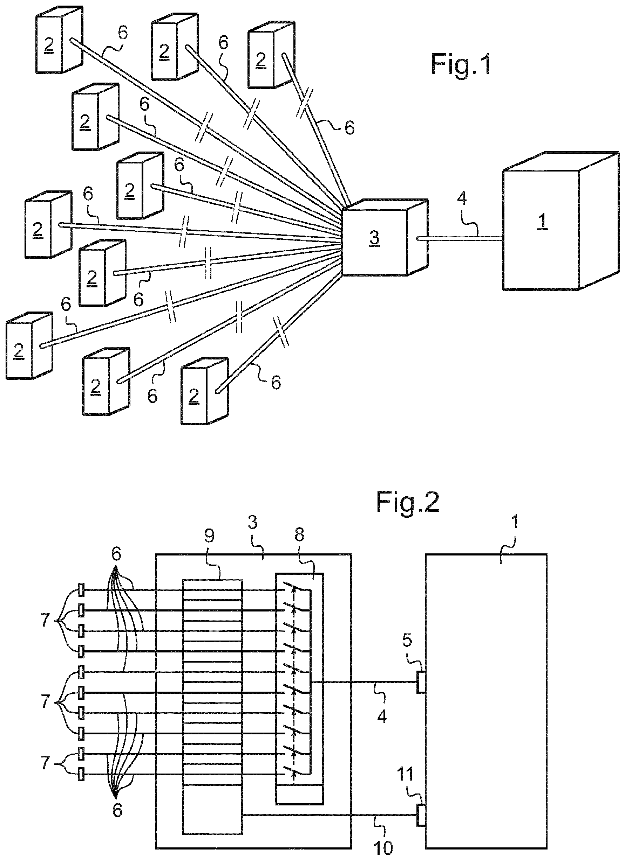

A la figure 1 est représenté un ensemble comportant une unité informatique 1, telle qu'un ordinateur ou un serveur, reliée à des équipements 2, tels que des équipements électromécaniques, électromagnétiques ou électroniques comme des actionneurs, des périphériques informatiques, ou des ordinateurs.

Les équipements 2 sont raccordés à l'unité informatique par un dispositif de connexion 3 comportant une liaison principale 4 pourvue d'un connecteur 5 de raccordement à l'unité informatique 1 et des liaisons secondaires 6 pourvues chacune d'un connecteur 7 de raccordement à l'un des équipements 2. Les liaisons 4, 6 sont ici de type Ethernet et les liaisons secondaires 6 (dix liaisons secondaires de débit unitaire égal à 100 Mb/s) ont un débit global égal à un débit maximal (1000 Mb/s) de la liaison principale 4. L'invention peut bien évidemment être mise en oeuvre au moyen de liaison ayant des débits différents de ceux mentionnés précédemment et, par exemple 1000 Mb/s et 10.000 Mb/s respectivement.

La liaison principale 4 est reliée aux liaisons secondaires 6 par un module d'aiguillage 8. Le module d'aiguillage 8 est agencé pour relier chacune des liaisons secondaires 6 à la liaison principale 4. Dans le sens de l'émission depuis la ligne principale 4, le module d'aiguillage 8 est plus particulièrement agencé pour orienter les trames émises vers les liaisons secondaires 6 en fonction de l'un au moins des paramètres suivants : une adresse physique (ou MAC) source et/ou un tag qui sont contenus dans les trames. Dans le premier cas, l'unité informatique 1 comporte une pluralité d'adresses physiques qui sont utilisées chacune pour l'échange de données avec un équipement particulier et donc, une liaison secondaire 6 particulière. Dans le deuxième cas, il est possible de s'affranchir de l'utilisation de l'adresse physique en utilisant un tag inséré dans la trame par l'application informatique émettrice. Le module d'aiguillage 8 dispose d'une table mettant en relation différents tags chacun avec une des lignes secondaires 6 de telle manière que le module d'aiguillage 8 sélectionne la ligne secondaire 6 sur laquelle la trame va être transmise en fonction dudit tag.

Chaque liaison secondaire 6 comporte un module de gestion de trames 9 associé au module d'aiguillage 8.

Le module de gestion de trames 9 comprend une mémoire tampon et est agencé pour effectuer un ordonnancement des trames ici du type premier entré premier sorti. Ainsi, la première trame à être mémorisée dans la mémoire tampon est la première à en sortir et ainsi de suite.

Le module de gestion de trames 9 est également agencé pour rejeter des trames en fonction d'au moins un critère prédéterminé. Ce critère peut résulter d'une obligation de sécurité (trame comportant des données dont l'émission ou la réception est interdite, par exemple en raison d'un critère de sécurité portant sur le type de trame) ou d'une obligation de service (par exemple, trame de taille trop élevée).

Le module de gestion de trames 9 comporte ici une entrée de configuration reliée par une liaison additionnelle 10 à un connecteur 11 de raccordement à l'unité informatique 1. La liaison additionnelle 10 est de type Ethernet. L'unité informatique 1 peut ainsi piloter directement le module de gestion de trames 9 par exemple en mettant à jour ou en modifiant le ou les critères de rejet des trames.

Selon une variante préférentielle, l'entrée de configuration est reliée directement par la liaison principale 4 au connecteur 5. Dans ce cas, les trames comportent un marqueur (ou tag) indiquant que les données contenues dans la trame ne sont pas destinées à être émises sur des lignes secondaires 6 mais à la configuration du module de gestion 9.

On comprend que le dispositif de l'invention permet de relier au moins une unité informatique à une pluralité d'équipements en utilisant des liaisons Ethernet, sans faire intervenir de protocole intermédiaire entre la liaison principale et les liaisons secondaires et sans possibilité d'un transit direct de données entre les liaisons secondaires.

Selon un autre mode de réalisation, l'invention concerne un ensemble unité informatique et équipements raccordés à l'unité informatique par un dispositif de connexion multiple.

Comme dans le premier mode de réalisation, le dispositif comporte une liaison principale pourvue d'un connecteur de raccordement à l'unité informatique et reliée par un module d'aiguillage à une pluralité de liaisons secondaires pourvues chacune d'un connecteur de raccordement à l'un des équipements.

Les liaisons secondaires ont ici un même débit théorique que la liaison principale (il n'y a pas de limite physique au débit des liaisons secondaires).

L'unité informatique et les équipements sont programmés chacun pour ne pas émettre sur les liaisons secondaires de trames de taille et de nombre supérieurs à des seuils prédéterminés tels que les liaisons secondaires assurent un débit global sensiblement égal à un débit maximal de la liaison principale. La détermination de ces seuils est connue en elle-même et vise à éviter un engorgement de la liaison principale (dans le sens de la réception) et d'une ou plusieurs liaisons secondaires (dans le sens de l'émission).

Bien entendu, l'invention n'est pas limitée aux modes de réalisation décrits mais englobe toute variante entrant dans le champ de l'invention telle que définie par les revendications.

En particulier, la structure du dispositif peut être différente de celle décrite. Le dispositif peut par exemple comprendre plusieurs liaisons principales, le module d'aiguillage assurant la répartition des trames entre les liaisons secondaires et les liaisons principales. Le débit global des liaisons principales est sensiblement égal au débit maximal de la liaison principale de plus faible débit.

Dans les modes de réalisation décrit, les liaisons secondaires ont toutes un même débit unitaire réel mais ce n'est pas obligatoire. En outre, le débit global des liaisons secondaires dans les modes de réalisation décrits est sensiblement égal au débit maximal de la liaison principale, ce qui permet d'exploiter au mieux les liaisons. En variante, il est possible que le débit global des liaisons secondaires soit inférieur au débit maximal de la liaison principale au lieu d'être égal à celui-ci.

## Revendications

1. Dispositif de connexion multiple à une unité informatique (1), le dispositif comportant au moins une liaison principale (4) pourvue d'un connecteur de raccordement (5) à l'unité informatique et reliée par un module d'aiguillage(8), à une pluralité de liaisons secondaires (6) qui sont pourvues d'un connecteur de raccordement externe (7) et qui ont un débit global égal à un débit maximal de la liaison principale, le module d'aiguillage étant agencé pour interdire un raccordement direct des liaisons secondaires entre elles.

2. Dispositif selon la revendication 1, dans lequel les liaisons (4, 6) sont de type Ethernet.

3. Dispositif selon la revendication 1, dans lequel chaque liaison secondaire (6) comporte un module de gestion de trames (9).

4. Dispositif selon la revendication 3, dans lequel le module de gestion de trames (9) est agencé pour effectuer un ordonnancement des trames.

5. Dispositif selon la revendication 4, dans lequel l'ordonnancement est du type premier entré premier sorti.

6. Dispositif selon la revendication 4, dans lequel le module de gestion de trames (9) est agencé pour rejeter des trames en fonction d'au moins un critère prédéterminé.

7. Dispositif selon la revendication 3, dans lequel le module de gestion de trames (9) comporte une entrée de configuration reliée par la liaison principale (4) au connecteur de raccordement (5) à l'unité informatique.

8. Dispositif selon la revendication 3, dans lequel le module de gestion de trames (9) comporte une entrée de configuration reliée par une liaison additionnelle (10) à un connecteur de raccordement à l'unité informatique.

9. Dispositif selon la revendication 8, dans lequel la liaison additionnelle (10) est de type Ethernet.

10. Dispositif selon la revendication 1, dans lequel le module d'aiguillage (8) est agencé pour orienter des trames émises vers les liaisons secondaires (6) en fonction de l'un au moins des paramètres suivants :
- adresse physique source figurant dans les trames,
- tag contenu dans les trames.

11. Ensemble unité informatique (1) et équipements (2) raccordés à l'unité informatique par un dispositif selon l'une quelconque des revendications précédentes comportant une liaison principale (4) pourvue d'un connecteur de raccordement (5) à l'unité informatique et reliée par un module d'aiguillage (8) à une pluralité de liaisons secondaires (6) pourvues chacune d'un connecteur de raccordement (7) à l'un des équipements, l'unité informatique et les équipements étant programmés chacun pour ne pas émettre sur la liaison secondaire de trames de taille et de nombre supérieurs à des seuils prédéterminés pour que les liaisons secondaires assurent un débit global sensiblement égal à un débit maximal de la liaison principale.

## Patentansprüche

1. Vorrichtung zum Mehrfachanschluss an eine Computereinheit (1), wobei die Vorrichtung mindestens eine Hauptverbindung (4) umfasst, die mit einem Verbindungsanschluss (5) zum Anschluss an die Computereinheit versehen und über ein Weichenmodul (8) mit einer Vielzahl von sekundären Verbindungen (6) verbunden ist, die mit einem externen Verbindungsanschluss (7) versehen sind und einen Gesamtdurchsatz haben, der gleich einem maximalen Durchsatz der Hauptverbindung ist, wobei das Weichenmodul so ausgebildet ist, dass es eine direkte Verbindung der sekundären Verbindungen untereinander verhindert.

2. Vorrichtung nach Anspruch 1, bei der die Verbindungen (4, 6) vom Typ Ethernet sind.

3. Vorrichtung nach Anspruch 1, bei der die sekundäre Verbindung (6) ein Rahmenverwaltungsmodul (9) umfasst.

4. Vorrichtung nach Anspruch 3, bei der das Rahmenverwaltungsmodul (9) so ausgebildet ist, dass es eine Ablaufplanung der Rahmen durchführt.

5. Vorrichtung nach Anspruch 4, bei der die Ablaufplanung vom Typ First-In-First-Out ist.

6. Vorrichtung nach Anspruch 4, bei der das Rahmenverwaltungsmodul (9) so ausgebildet ist, dass es Rahmen in Abhängigkeit von mindestens einem vorgegebenen Kriterium zurückweist.

7. Vorrichtung nach Anspruch 3, bei der das Rahmenverwaltungsmodul (9) einen Konfigurationseingang umfasst, der über die Hauptverbindung (4) mit dem Verbindungsanschluss (5) zum Anschluss an die Computereinheit verbunden ist.

8. Vorrichtung nach Anspruch 3, bei der das Rahmenverwaltungsmodul (9) einen Konfigurationseingang umfasst, der über eine zusätzliche Verbindung (10) mit einem Verbindungsanschluss zum Anschluss an die Computereinheit verbunden ist.

9. Vorrichtung nach Anspruch 8, bei der die zusätzliche Verbindung (10) vom Typ Ethernet ist.

10. Vorrichtung nach Anspruch 1, bei der das Weichenmodul (8) so ausgebildet ist, dass es gesendete Rahmen in Richtung der sekundären Verbindungen (6) in Abhängigkeit von mindestens einem der folgenden Parameter lenkt:
- physikalische Quelladresse, die in den Rahmen steht,
- Tag, das in den Rahmen enthalten ist.

11. Anordnung aus Computereinheit (1) und Geräten (2), die an die Computereinheit über eine Vorrichtung nach einem der vorhergehenden Ansprüche angeschlossen sind, die eine Hauptverbindung (4) umfasst, die mit einem Verbindungsanschluss (5) zum Anschluss an eine Computereinheit versehen und über ein Weichenmodul (8) mit einer Vielzahl von sekundären Verbindungen (6) verbunden ist, die jeweils mit einem Verbindungsanschluss (7) zum Anschluss an eines der Geräte versehen sind, wobei die Computereinheit und die Geräte jeweils so programmiert sind, dass sie auf der sekundären Verbindung keine Rahmen der Größe und Anzahl senden, die größer als vorgegebene Schwellwerte sind, damit die sekundären Verbindungen einen Gesamtdurchsatz gewährleisten, der im Wesentlichen gleich einem maximalen Durchsatz der Hauptverbindung ist.

## Claims

1. A device for making multiple connections to a computer unit (1), the device comprising at least one main connection (4) provided with a connector (5) for connection to the computer unit and connected via a switch module (8) to a plurality of secondary connections (6), each provided with an external connector (7) and together presenting an overall data rate equal to a maximum data rate of the main connection, the switch module being arranged to forbid direct interconnection of the secondary connections therebetween.

2. A device according to claim 1, wherein the connections (4, 6) are of the Ethernet type.

3. A device according to claim 1, wherein each secondary connection (6) includes a frame management module (9).

4. A device according to claim 3, wherein the frame management module (9) is arranged to order frames.

5. A device according to claim 4, wherein the ordering is of the first-in, first-out type.

6. A device according to claim 4, wherein the frame management module (9) is arranged to reject frames as a function of at least one predetermined criterion.

7. A device according to claim 3, wherein the frame management module (9) has a configuration input connected via the main connection (4) to the connector (5) for connection to the computer unit.

8. A device according to claim 3, wherein the frame management module (9) has a configuration input connected via an additional connection (10) to a connector for connection to the computer unit.

9. A device according to claim 8, wherein the additional connection (10) is of the Ethernet type.

10. A device according to claim 1, wherein the switch module (8) is arranged to route transmitted frames to the secondary connections (6) as a function of at least one of the following parameters:
• a source physical address appearing in each frame; and
• a tag contained in each frame.

11. An assembly comprising a computer unit (1) and pieces of equipment (2) connected to the computer unit via a device according to any preceding claim and comprising a main connection (4) having a connector (5) for connection to the computer unit and connected by a switch module (8) to a plurality of secondary connections (6), each provided with a connector (7) for connection to a respective piece of equipment, the computer unit and the pieces of equipment all being programmed to avoid transmitting frames over the secondary connections that are greater in size and number than predetermined thresholds so that the secondary connections convey an overall data rate that is substantially equal to a maximum data rate of the main connection.
